# EUROPEAN PATENT APPLICATION

(11) **EP 3 809 712 A1**
(43) Date of publication of application: **21.04.2021**
(21) Application number: 19819294.0
(22) Date of filing: 25.04.2019
(51) Int. Cl.: H04Q 9/00, G06F 3/01, G06F 3/0346, G06F 3/16

(54) **INFORMATION PROCESSING DEVICE AND INFORMATION PROCESSING METHOD**

(30) Priority: 12.06.2018 JP 2018111787
(71) Applicant: Sony Corporation, 108-0075 Tokyo (JP)
(72) Inventor: YAMAMOTO, Kazunori, Tokyo 108-0075 (JP)
(74) Representative: 2SPL Patentanwälte PartG mbB
(86) International application number: PCT/JP2019/017729
(87) International publication number: WO 2019/239738

(57) **Abstract**

Provided is a technique capable of specifying equipment to be operated even in a case where the operation target to be designated is ambiguous in the operation of equipment by a user.

An information processing apparatus includes: an operation information acquisition unit that acquires operation information as sound data indicating an operation by a sound of a user or image data indicating an operation by behavior of the user; an instruction recognition unit that analyzes the sound data or image data as the operation information, recognizes an instruction content indicated by the operation, and specifies controlled equipment that is an operation target; and an instruction transmission unit that generates a control signal according to the instruction content recognized by the instruction recognition unit and transmits the control signal to the controlled equipment specified by the instruction recognition unit.

## Description

### TECHNICAL FIELD

The present technology relates to an information processing apparatus and an information processing method, and particularly to a technical field of equipment control.

### BACKGROUND ART

In an apparatus that controls actions of various equipment in an environment, there is known a technique of controlling actions of equipment in the environment according to a command input by a user. For example, Patent Document 1 discloses a technique of controlling the action of equipment in the environment by a user inputting a sound instruction to the apparatus.

### CITATION LIST

### PATENT DOCUMENT

Patent Document 1: Japanese Patent Application Laid-Open No. 2017-123564

### SUMMARY OF THE INVENTION

### PROBLEMS TO BE SOLVED BY THE INVENTION

By the way, in a case where the user requests the apparatus to operate the equipment, for example, by sound, the operation request is often input in an expression such as "Operate that equipment" in which target equipment is ambiguous.

Therefore, the present disclosure provides a technique capable of specifying equipment to be operated even in a case where the operation target designated is ambiguous in the operation of equipment by the user.

### SOLUTIONS TO PROBLEMS

An information processing apparatus according to the present technology includes: an operation information acquisition unit that acquires operation information as sound data indicating an operation by a sound of a user or image data indicating an operation by behavior of the user; an instruction recognition unit that analyzes the sound data or image data as the operation information, recognizes an instruction content indicated by the operation, and specifies controlled equipment that is an operation target by the operation information among a plurality of controlled equipment; and an instruction transmission unit that generates a control signal according to the instruction content recognized by the instruction recognition unit and transmits the control signal to the controlled equipment specified by the instruction recognition unit.

Therefore, it is possible to execute the control in which the instruction content input by the sound of the user is reflected on the specific controlled equipment of the plurality of controlled equipment. Furthermore, it is also possible to execute the control that reflects the instruction content according to the behavior of the user.

Furthermore, by analyzing both the sound data and the image data indicating the operation by the sound and behavior, an unclear part of the sound data and the image data is complemented, and the operation instruction content from the user is reflected more accurately. Furthermore, the accuracy of specifying the controlled equipment to be operated is also improved.

With the information processing apparatus according to the present technology described above, the instruction transmission unit may refer to a storage unit that stores identification information and address information of the controlled equipment in association with each other, acquire the address information corresponding to the identification information of the controlled equipment specified as an operation target, and transmit the control signal using the address information.

Therefore, when the identification information of the controlled equipment to be operated can be acquired, a control signal according to the instruction content indicated by the user's operation to the controlled equipment can be transmitted to the controlled equipment.

With the information processing apparatus according to the present technology described above, the instruction recognition unit may acquire the identification information of the controlled equipment that is an operation target when the controlled equipment is in a position or direction designated by the behavior of the user shown in the image data as the operation information by receiving a transmission signal from the controlled equipment arranged in the position or direction.

That is, the information processing apparatus specifies the controlled equipment to be operated by analyzing the gesture of the user such as pointing to the controlled equipment shown in the image data, and receives the transmission signal from the specified controlled equipment to acquire the identification information. Then, the information processing apparatus realizes the operation of the controlled equipment in which the user's instruction content is reflected by transmitting the control signal according to the user's instruction content to the controlled equipment to the address corresponding to the identification information.

With the information processing apparatus according to the present technology described above, the instruction recognition unit may acquire the identification information of the controlled equipment that is an operation target when the controlled equipment is in a position or direction designated by the behavior of the user shown in the image data as the operation information from the image data of the controlled equipment arranged in the position or direction.

For example, a QR code (registered trademark) printed on the controlled equipment to be operated is acquired as the image data by the imaging apparatus or the like built in the information processing apparatus, and the identification information of the controlled equipment is acquired by analyzing the image data.

With the information processing apparatus according to the present technology described above, the instruction recognition unit may instruct specific controlled equipment to transmit a signal, and by receiving the signal, determine position information of the controlled equipment such that storage data as the position information corresponding to the identification information is formed.

By forming the storage data as the position information corresponding to the identification information, when the position information indicated by the gesture of the user or the like is acquired by analyzing the image data or the like, the identification information of the controlled equipment around the position information can be acquired as the identification information of the operation target.

With the information processing apparatus according to the present technology described above, the instruction recognition unit may specify controlled equipment arranged at a position designated by an utterance of the user shown in the sound data as the operation information as the controlled equipment that is an operation target.

In a case where the user's utterance includes information sufficient to specify the position, by analyzing the sound data, it is possible to specify controlled equipment as the controlled equipment to be operated regardless of the presence or absence of a gesture for specifying the position of the controlled equipment by the user.

With the information processing apparatus according to the present technology described above, the instruction recognition unit may calculate in-space coordinates of a position designated by the behavior of the user shown in the image data as the operation information and specify controlled equipment positioned at the in-space coordinates as the controlled equipment that is an operation target.

Therefore, by calculating the position designated by the user as the value of the in-space coordinates, the designated position can be grasped as a specific numerical value.

With the information processing apparatus according to the present technology described above, the instruction recognition unit may sequentially instruct a plurality of controlled equipment to transmit signals, by receiving the signals, determine position information of each controlled equipment, and specify the controlled equipment that is an operation target when the controlled equipment is in a position or direction designated by the behavior of the user.

By sequentially instructing a plurality of controlled equipment to transmit signals, when the signals are received, the signals will not be confused with signals from other controlled equipment, and the controlled equipment to be operated can be clearly specified.

With the information processing apparatus according to the present technology described above, the instruction recognition unit may specify the controlled equipment that is an operation target by analyzing the image data in a case where the controlled equipment that is an operation target cannot be specified by analyzing the sound data.

That is, in a case where the controlled equipment can be specified by analyzing the sound data, the image data analyzing processing can be omitted.

An information processing apparatus according to the present technology includes: a communication unit that receives a control signal transmitted by a control apparatus executing: operation information acquisition processing that acquires operation information as sound data indicating an operation by a sound of a user or image data indicating an operation by behavior of the user, instruction recognition processing that analyzes the sound data or image data as the operation information, recognizes an instruction content indicated by the operation, and specifies controlled equipment that is an operation target by the operation information among a plurality of controlled equipment, and instruction transmission processing that generates a control signal according to the instruction content recognized in the instruction recognition processing and transmits the control signal to the controlled equipment specified in the instruction recognition processing; and an equipment control unit that controls an action according to the control signal received by the communication unit.

An information processing method according to the present technology is an information processing method to be performed by an information processing apparatus executing: operation information acquisition processing that acquires operation information as sound data indicating an operation by a sound of a user or image data indicating an operation by behavior of the user; instruction recognition processing that analyzes the sound data or image data as the operation information, recognizes an instruction content indicated by the operation, and specifies controlled equipment that is an operation target by the operation information among a plurality of controlled equipment; and instruction transmission processing that generates a control signal according to the instruction content recognized by the instruction recognition processing and transmits the control signal to the controlled equipment specified in the instruction recognition processing.

Another information processing method according to the present technology is an information processing method to be performed by an information processing apparatus executing:
communication processing that receives a control signal transmitted by a control apparatus executing operation information acquisition processing that acquires operation information as sound data indicating an operation by a sound of a user or image data indicating an operation by behavior of the user, instruction recognition processing that analyzes the sound data or image data as the operation information, recognizes an instruction content indicated by the operation, and specifies controlled equipment that is an operation target, and instruction transmission processing that generates a control signal according to the instruction content recognized in the instruction recognition processing and transmits the control signal to the controlled equipment specified in the instruction recognition processing; and
equipment control processing that controls an action according to the control signal received by the communication processing.

### EFFECTS OF THE INVENTION

According to the present technology, even in a case of an operation request in which the specification of the target equipment is ambiguous, the accuracy of specifying the equipment to be operated can be improved, and thus a comfortable operating environment of the equipment for the user can be realized.

Note that the effects described above are not necessarily limitative. With or in place of the above effects, there may be achieved any one of the effects described in this disclosure or other effects that may be grasped from this disclosure.

### BRIEF DESCRIPTION OF DRAWINGS

Fig. 1 is an explanatory diagram of a system configuration example according to an embodiment of the present technology.
Fig. 2 is an explanatory diagram of a variation example of a system configuration example according to an embodiment.
Fig. 3 is an explanatory diagram of a database according to an embodiment.
Fig. 4 is a block diagram of a computer apparatus according to an embodiment.
Fig. 5 is an explanatory diagram of an overview of an agent system according to an embodiment.
Fig. 6 is an explanatory diagram of an overview of an agent system according to an embodiment.
Fig. 7 is a flowchart of processing of an entire system according to a first embodiment.
Fig. 8 is a flowchart of target equipment determination processing according to the first embodiment.
Fig. 9 is a flowchart of processing of an entire system according to a second embodiment.
Fig. 10 is a flowchart of target equipment determination processing according to the second embodiment.
Fig. 11 is a flowchart of target equipment determination processing according to a third embodiment.

### MODE FOR CARRYING OUT THE INVENTION

An embodiment will be described below in the following order.
<1. System configuration>
<2. Functional configuration of agent apparatus>
<3. Overview of agent system>
<4. Processing of first embodiment>
<5. Processing of second embodiment>
<6. Processing of third embodiment>
<7. Summary and variation example>

### <1. System configuration>

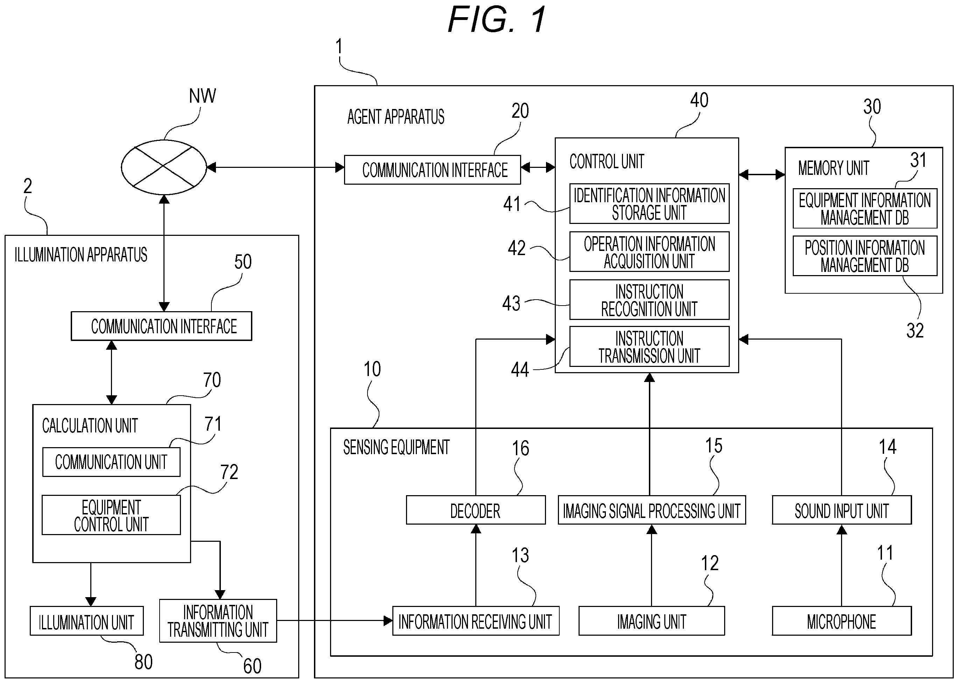

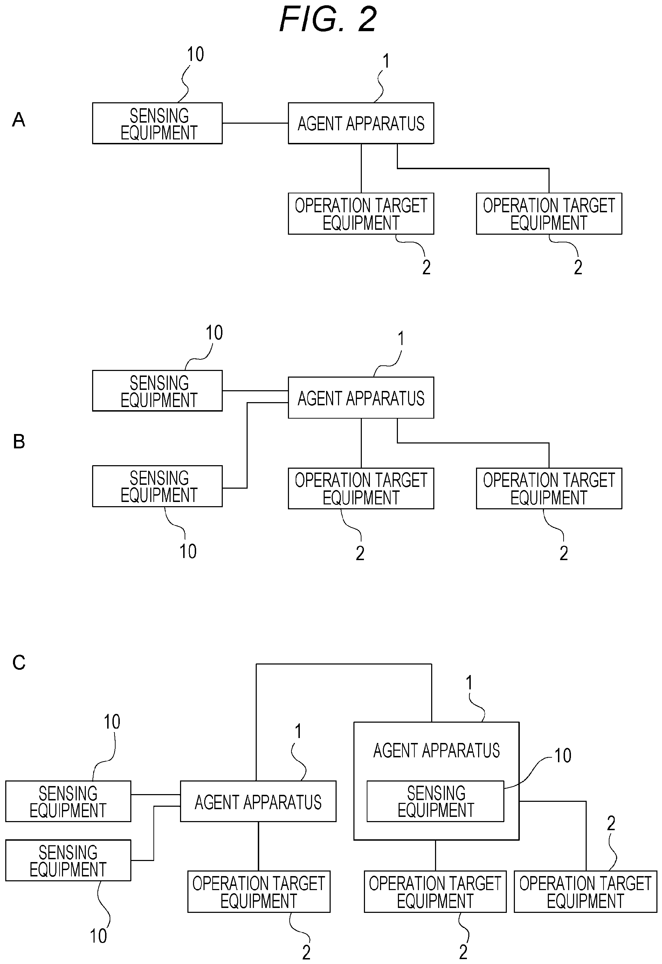

First, a system configuration example including an agent apparatus 1 will be described as an embodiment. Figs. 1 and 2 show a configuration example of a network system according to the embodiment.

The present embodiment is an agent system that realizes the operation of operation target equipment 2 (meaning controlled equipment to be operated) by the user inputting a command to the agent apparatus 1. In the embodiment, a plurality of the operation target equipment 2 is provided, and the agent apparatus 1 selects operation target equipment from the plurality of operation target equipment 2 according to a user's instruction, and realizes the operation of the selected equipment.

Furthermore, in the present embodiment, the user means a person who uses the agent system.

Furthermore, the agent apparatus 1 of the embodiment is an apparatus that includes an information processing apparatus and performs control or supplies information for control according to an instruction from the user with respect to the operation target equipment 2.

More specifically, the agent apparatus 1 inputs a surrounding sound picked up by a microphone, a captured image of the surrounding captured by an imaging apparatus, and surrounding detection signals from various sensing equipment. Then, it is an apparatus capable of recognizing the operation instruction content of the user on the basis of the input signal and controlling the operation target equipment 2 such as an illumination apparatus in accordance with it.

Note that the agent apparatus 1 can be realized by various equipment as long as it is peripheral equipment of the user who gives an instruction. For example, various apparatuses such as a personal computer apparatus, a terminal apparatus, a tablet, hot water supply operation equipment, a remote controller for home electric appliances, and a refrigerator, may function as the agent apparatus 1.

Furthermore, in the embodiment, an illumination apparatus 2 will be described as an example of the operation target equipment 2. Hereinafter, the operation target equipment 2 is also referred to as the illumination apparatus 2. Of course, the illumination apparatus 2 is an example, and various apparatuses such as a television apparatus, an audio apparatus, a hot water supply operation apparatus, a refrigerator, air conditioner equipment, an interactive apparatus, a robot, a personal computer apparatus, a terminal apparatus, and a tablet, are assumed to be the operation target equipment 2 that cooperates with the agent apparatus 1. The action of the illumination apparatus 2 in the description of the embodiment can be similarly applied to these various operation target equipment 2.

As shown in Fig. 1, such an agent apparatus 1 and operation target equipment 2 can communicate with each other via a network NW.

It is sufficient if the network NW is a transmission path through which the agent apparatus 1 can communicate with equipment outside the system, and various forms such as the Internet, local area network (LAN), virtual private network (VPN), intranet, extranet, satellite communication network, community antenna television (CATV) communication network, a telephone line network, and a mobile communication network are assumed.

The agent apparatus 1 is equipment separate from the operation target equipment 2. Furthermore, sensing equipment 10 is incorporated in the agent apparatus 1 as an example.

As the sensing equipment 10, for example, a microphone, an imaging apparatus (camera), a contact sensor, a load sensor, an illuminance sensor, an infrared sensor, an acceleration sensor, an angular velocity sensor, a laser sensor, or any other sensor is assumed.

Although the sensing equipment 10 is incorporated in the agent apparatus 1 here as an example, the sensing equipment 10 may of course be equipment separate from the agent apparatus 1.

Moreover, it may be assumed that the sensing equipment 10 is a sensing device built in equipment such as a smartphone or a wearable device. In that case, according to the configuration example of Fig. 1, the smartphone or the wearable device itself may be the agent apparatus 1.

The agent apparatus 1 acquires in advance identification information and the like of each of the plurality of operation target equipment 2 provided through the network NW. Then, by analyzing the sound data, the image data, and the like obtained from the sensing equipment 10, the operation instruction content from the user to the operation target equipment 2 and the operation target equipment 2 to be the operation target are specified. Thereafter, the agent apparatus 1 executes the operation instruction to the specified operation target equipment 2 by using an internet protocol address (IP address) which is the network address set in each operation target equipment 2.

Fig. 2A shows an example in which the agent apparatus 1, the operation target equipment 2, and the sensing equipment 10 are separately provided, and a plurality of operation target equipment 2 is provided.

Furthermore, Fig. 2B shows an example in which a plurality of sensing equipment 10 is separately provided in addition to the above. With this arrangement, by installing a plurality of sensing equipment 10, it is possible to acquire the identification information from the operation target equipment 2 by infrared communication or the like, and to acquire sound input or action input from the user. Furthermore, even in a case where the operation target equipment 2 are each installed in different spaces such as different rooms, the user can request an operation from each room by installing the sensing equipment 10 in each room. Furthermore, the identification information and the IP address of the operation target equipment 2 installed in different rooms can be acquired.

Furthermore, as shown in Fig. 2C, an agent system can be configured by a plurality of the agent apparatuses 1. As shown in the drawings, the sensing equipment 10 may be built in the agent apparatus 1. Furthermore, it is also conceivable that there is only one operation target equipment 2 in the space where a certain agent apparatus 1 is provided.

The above configurations are merely examples, and various other forms of configurations of the actual agent apparatus 1, the operation target equipment 2, and the sensing equipment 10 are possible.

### <2. Functional configuration of agent apparatus>

Returning to Fig. 1, a configuration example of the agent apparatus 1 and the illumination apparatus 2 (operation target equipment 2) will be described.

Fig. 1 shows a block diagram of the agent apparatus 1. In the embodiment, a case in which the sensing equipment 10 is built in the agent apparatus 1 will be described as an example.

The agent apparatus 1 includes the sensing equipment 10, a communication interface 20, a memory unit 30, and a control unit 40.

As the sensing equipment 10, here, a microphone 11, an imaging unit 12, an information receiving unit 13, a sound input unit 14, an imaging signal processing unit 15, and a decoder 16 are shown.

An ambient sound is collected by the microphone 11 and output as a sound signal. The sound signal obtained by the microphone 11 is subjected to amplification processing, filter processing, A/D conversion processing, and the like in the sound input unit 14, and is supplied to the control unit 40 as a digital sound signal.

The surroundings are captured by the imaging unit 12. The imaging signal obtained by an imager in the imaging unit 12 is subjected to necessary processing in the imaging signal processing unit 15, and is supplied to the control unit 40 as image data in frame units. The imaging unit 12 may use a plurality of imaging apparatuses in order to grasp the spatial coordinates of the surroundings.

The control unit 40 receives inputs of the sound signal of the ambient sound and the image signal of the ambient scene by such sensing equipment 10 constantly (for example, when the power is turned on) continuously or intermittently.

The information receiving unit 13 is, for example, an infrared sensor, and receives infrared light having identification information transmitted from an information transmitting unit 60 of the illumination apparatus 2 described later. The received infrared light is decoded by the decoder 16 for infrared data from a demodulation signal, and is supplied to the control unit 40 as the identification information for each illumination apparatus 2.

Here, it is desirable that the infrared light transmitted from the information transmitting unit 60 has high directivity. This is for, in a case where the information receiving unit 13 receives infrared light from the plurality of operation target equipment 2, distinguishing the operation target equipment 2 that has transmitted the infrared light depending on from which direction the infrared light has been transmitted. Furthermore, the agent apparatus 1 rotates the information receiving unit 13 (or may be the imaging unit 12 incorporating the image receiving unit 13) so as to be able to determine the direction of each operation target equipment 2 from the angle of the information receiving unit 13 at which the reception is enabled.

Note that the communication means for transmitting the identification information of the illumination apparatus 2 to the information receiving unit 13 of the agent apparatus 1 is not limited to infrared light, and various methods can be applied as long as it has a high directivity and indicates that the illumination apparatus 2 performs transmitting. For example, when the operation target equipment 2 constantly emits light, visible light communication or the like may be used. In an environment where a vibration sensor is embedded in the wall surface or floor of the place where the operation target equipment 2 is installed, the identification information may be transmitted by minute vibration. Furthermore, in an environment where a magnetic sensor is embedded, it is possible to communicate by electromagnetic.

Furthermore, it is also conceivable to use the imaging unit 12 as a method in which the agent apparatus 1 acquires the identification information of the operation target equipment 2. In this case, for example, by printing a QR code (registered trademark) or the like on the surface of the operation target equipment 2, the identification information is embedded. The agent apparatus 1 can acquire the image data of the code by the imaging unit 12, perform necessary processing in the imaging signal processing unit 15, and then analyze the image data by the control unit 40, thereby acquiring the identification information of each operation target equipment 2.

The communication interface 20 is a part that communicates between the agent apparatus 1 and the illumination apparatus 2 via the network NW. The agent apparatus 1 receives the identification information and the IP address of the illumination apparatus 2 from the illumination apparatus 2. Furthermore, the agent apparatus 1 transmits information for operating the illumination apparatus 2 to the illumination apparatus 2.

The memory unit 30 provides a work region required by the control unit 40 for arithmetic processing, and stores coefficients, data, tables, databases, or the like, used for arithmetic processing. Hereinafter, "database" is also referred to as "DB". The details of the DB will be described later.

The control unit 40 includes an information processing apparatus such as a microcomputer.

The control unit 40 has functions as an identification information storage unit 41, an operation information acquisition unit 42, an instruction recognition unit 43, and an instruction transmission unit 44. These functions are expressed by software that defines processing such as of a microcomputer. The processing executed by the control unit 40 on the basis of these functions will be described in detail later.

The identification information storage unit 41 acquires the identification information and the IP address information of the illumination apparatus 2 via the network NW. Then, the identification information storage unit 41 stores the IP address information associated with the identification information in the DB or the like of the memory unit 30. Therefore, in a case where the agent apparatus 1 transmits the instruction content information regarding the operation to the illumination apparatus 2, the illumination apparatus 2, a target for transmission, can be specified.

The operation information acquisition unit 42 acquires, from the sensing equipment 10, operation information as sound data and image data indicating an operation by the user's sound and behavior. Furthermore, the operation information acquisition unit 42 acquires the identification information of the illumination apparatus 2 from the sensing equipment 10.

Specifically, the operation information acquisition unit 42 acquires the surrounding sound collected by the microphone 11, a captured image of the surroundings captured by the imaging unit 12, and a detection signal of the surroundings, from various other sensing equipment 10, received by infrared communication received by the information receiving unit 13.

The instruction recognition unit 43 analyzes the sound data and the image data as the operation information, recognizes the instruction content indicated by the operation, and specifies the illumination apparatus 2, which is a target of the operation.

The instruction recognition unit 43 performs processing of analyzing the sound input information and analyzing the intention of the input information from the user. Specifically, the instruction recognition unit 43 understands the utterance (terms related to the operation) related to the operation of the operation target equipment by the user by sound recognition and changes the setting according to the intention of the user.

For example, the utterance "turn on the light" is understood as a word that causes the illumination apparatus 2 that is the operation target equipment to turn on the light. For this purpose, for example, various words relating to various operations are stored in the memory unit 30 so that the user's intention can be correctly understood by collation.

Specifically, a table in which many words expressing one setting operation are stored is provided so that, for example, with regard to the illumination apparatus 2, various words such as "turn on the light", "turn on the switch of the light", "turn off the light", "brighten", "darken", and the like can be recognized as words that give an instruction to turn on the illumination apparatus 2.

Furthermore, a table in which many words expressing the position and the state of the illumination apparatuses 2 may be provided, so that the illumination apparatus 2 can recognize each word such as "this room", "near the window", or "the side of the TV", for specifying a certain illumination apparatus 2 among a plurality of illumination apparatuses 2, as words that specify the illumination apparatus 2 such as "turn on the light in this room", "turn off the light near the window", or "darken the side of the TV".

The instruction recognition unit 43 collates the utterance of the operation requester with these tables to determine the user's instruction content with respect to the illumination apparatus 2 and the target illumination apparatus 2 the user desires to operate.

The instruction recognition unit 43 analyzes the sensing information by the imaging unit 12 to read the user's action, and thereby performs the processing of analyzing the intention of the input information from the user. Specifically, the user's gesture (action related to the operation) related to the operation of the illumination apparatus 2 can be understood by the image analysis and the setting can be changed according to the intention of the user.

For example, the movement or shape of the user's hand or finger is understood as the action of turning on the illumination apparatus 2. Furthermore, the direction indicated by the user's hand or finger is understood as an action in which the user selects the illumination apparatus 2 to be operated. For this purpose, for example, various actions relating to various operations are stored in the memory unit 30 so that the user's intention can be correctly understood by collation.

Furthermore, by combining analyses of sound data and image data, it becomes possible to more accurately understand the user's intention. For example, in a case where the user shows a gesture that points to the direction for the illumination apparatus 2 with a finger and utters "turn on that light", it is difficult to understand which direction "that" of "turn on that light" indicates only by analyzing the sound data. Therefore, by analyzing the gesture in which the user points to the illumination apparatus 2, the illumination apparatus 2 to be operated is specified from the direction of the finger. That is, it is possible to complement an unclear word part with an image.

Furthermore, the instruction recognition unit 43 analyzes the sound data and the image data described above to acquire the identification information of the illumination apparatus 2 specified as the operation target as it is received by the information receiving unit 13, for example, by infrared communication.

The instruction transmission unit 44 generates a control signal according to the instruction content analyzed by the instruction recognition unit 43, and transmits the control signal to the illumination apparatus 2 specified by the instruction recognition unit 43.

Next, the configuration of the illumination apparatus 2 will be described as an example of the operation target equipment 2 in the embodiment.

The illumination apparatus 2 includes a communication interface 50, an information transmitting unit 60, a calculation unit 70, and an illumination unit 80.

The communication interface 50 is a part that communicates between the agent apparatus 1 and the illumination apparatus 2 via the network NW.

Furthermore, the information transmitting unit 60 is a part that transmits the identification information of the illumination apparatus 2 via infrared communication. The information transmitting unit 60 may constantly perform transmission of infrared communication, or may perform transmission only when there is a request from the agent apparatus 1 via the network NW.

Here, the functional configuration of the calculation unit 70 will be described. The calculation unit 70 includes, for example, a microcomputer or the like, and is provided with a communication unit 71 and an equipment control unit 72.

The communication unit 71 can communicate with the control unit 40 of the agent apparatus 1 via the network NW by the communication interface 50. Therefore, the calculation unit 70 can acquire information about the operation content of the illumination apparatus 2 from the control unit 40.

The equipment control unit 72 performs control according to an operation control instruction received by the communication unit 71 from the agent apparatus 1, and thus various outputs according to the instruction content information set by the agent apparatus 1 can be realized by the illumination apparatus 2. For example, the illumination unit 80 is turned on or off.

Furthermore, the equipment control unit 72 causes the information transmitting unit 60 to transmit the identification information of the illumination apparatus 2 via infrared communication.

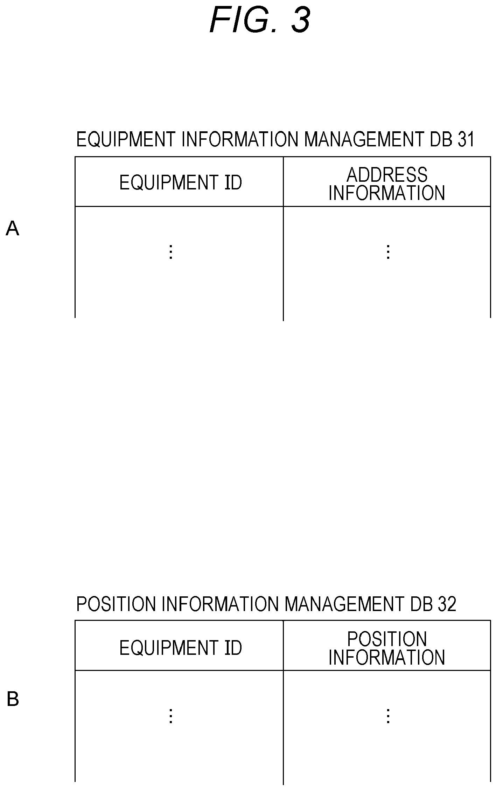

Next, the DB used by the control unit 40 of the agent apparatus 1 having these functions to specify the operation target equipment 2 that is the operation target and to transmit the operation instruction content information to the operation target equipment will be described with reference to Fig. 3. In the agent apparatus 1, various DBs are stored in the memory unit 30, for example.

The DB includes, for example, an equipment information management DB 31, a position information management DB 32, and the like.

Of course, in addition to this, a DB necessary for functioning as the agent apparatus 1 of the embodiment may be included as a DB.

The equipment information management DB 31, as shown in Fig. 3A, for example, stores an equipment ID (identification) that is the identification information of the operation target equipment 2 and address information such as an IP address allocated to the operation target equipment 2. Therefore, the agent apparatus 1 can transmit the instruction content information regarding the operation to the appropriate operation target equipment 2 as long as the equipment ID of the operation target equipment 2 can be specified.

The position information management DB 32 stores the position information used to identify the operation target equipment 2 with respect to the equipment ID that is the identification information of the operation target equipment 2. As the position information, for example, a value of the spatial coordinate of each operation target equipment 2 obtained by analyzing the image data captured by the imaging apparatus is stored. Furthermore, the position information can be stored as a relative relationship with respect to objects arranged in a space such as "beside the television apparatus", "on the desk", "near the window", "in the room" and the like. In this case, the agent apparatus 1 analyzes the image data acquired from the imaging unit 12.

Furthermore, the position information can be stored in association with the identification information of the sensing equipment 10 that has analyzed the operation target equipment 2. Therefore, for example, in a case where the sensing equipment 10 is installed in each room, by associating the operation target equipment 2 with the sensing equipment 10, the operation target equipment 2 can be operated in room units.

Each of the above DBs may be built in a computer (for example, the operation target equipment 2 or the like) different from the agent apparatus 1, or may be built in the agent apparatus 1.

Furthermore, the equipment information management DB 31 and the position information management DB 32 may be realized in any form as long as the agent apparatus 1 can access it. For example, all of the DBs may be formed in the memory unit 30 in the same system as the agent apparatus 1, or some or all of the DBs may be provided in a computer system separately, at a remote place, or the like. Of course, each DB does not have to be formed in one apparatus (for example, one HDD). Furthermore, each DB does not have to be configured as one DB. For example, the information stored as the position information management DB 32 may be stored and managed by the equipment information management DB 31. The DBs described in the embodiment are merely examples of the storage unit for information related to the processing of the embodiment in the form of one DB.

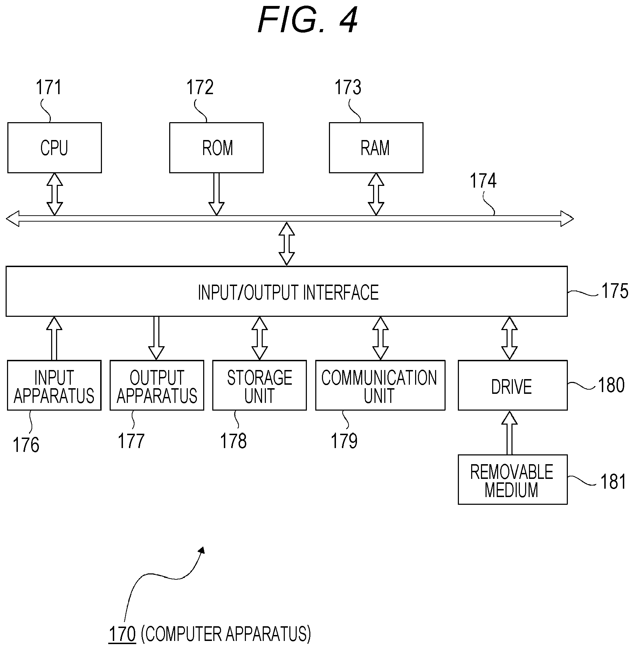

Fig. 4 shows the hardware configuration of the information processing apparatus that configures the agent apparatus 1 and the illumination apparatus 2 as the operation target equipment described above. Each apparatus shown as the agent apparatus 1 and the illumination apparatus 2 can be realized as a computer apparatus 170 capable of information processing and information communication as shown in Fig. 4.

In Fig. 4, a central processing unit (CPU) 171 of the computer apparatus 170 executes various processing according to a program stored in a read only memory (ROM) 172 or a program loaded from a storage unit 178 to a random access memory (RAM) 173. Data or the like required for the CPU 171 to execute various processing are also stored in the RAM 173 as appropriate.

The CPU 171, the ROM 172, and the RAM 173 are connected to each other via a bus 174. An input/output interface 175 is also connected to the bus 174.

The input/output interface 175 is connected to the sensing equipment 10 or an input apparatus 176 including an operator or an operation device.

Furthermore, there also may be a case where an output apparatus 177 including a display including a liquid crystal display (LCD) or an organic electroluminescence (EL) panel and a speaker is connected to the input/output interface 175.

There may be a case where the input/output interface 175 is connected to the storage unit 178 including a hard disk or the like and a communication unit 179 including a modem or the like.

The communication unit 179 performs communication processing via a transmission path such as the Internet shown as the network NW, or performs communication by wire/wireless communication, bus communication, or the like between apparatuses.

A drive 180 is also connected to the input/output interface 175 as necessary, a removable medium 181 such as a magnetic disk, an optical disk, a magneto-optical disk, or a semiconductor memory is appropriately mounted thereon, and a computer program read therefrom is installed in the storage unit 178 as necessary.

In a case where the functions of the control unit 40 of the agent apparatus 1 and the calculation unit 70 of the illumination apparatus 2 described above are executed by software, the programs constituting the software can be installed from a network or a recording medium.

This recording medium includes the removable medium 181 including a magnetic disk, an optical disk, a magneto-optical disk, a semiconductor memory, or the like on which the program is recorded, which is distributed to distribute the program to the user. Alternatively, it also includes the ROM 172 in which a program is recorded or a hard disk included in the storage unit 178, which is distributed to the user in a state of being incorporated in the apparatus body in advance, for example.

With the configuration as described above, it is possible to realize the agent system of the embodiment.

Note that the agent apparatus 1 and the operation target equipment 2 are configured by one or a plurality of information processing apparatuses. Furthermore, each function in the control unit 40 in the agent apparatus 1 and the calculation unit 70 in the operation target equipment 2 is a function realized by processing executed by the CPU 171 according to a program in the information processing apparatus. However, the processing of all or some of the configurations described below may be realized by hardware.

Furthermore, in a case where each function is realized by software, each function does not need to be realized by an independent program. Processing of a plurality of functions may be executed by one program, or one function may be realized by cooperation of a plurality of program modules. Furthermore, each function may be distributed to a plurality of information processing apparatuses. Moreover, one of the functions may be realized by a plurality of information processing apparatuses.

### <3. Overview of agent system>

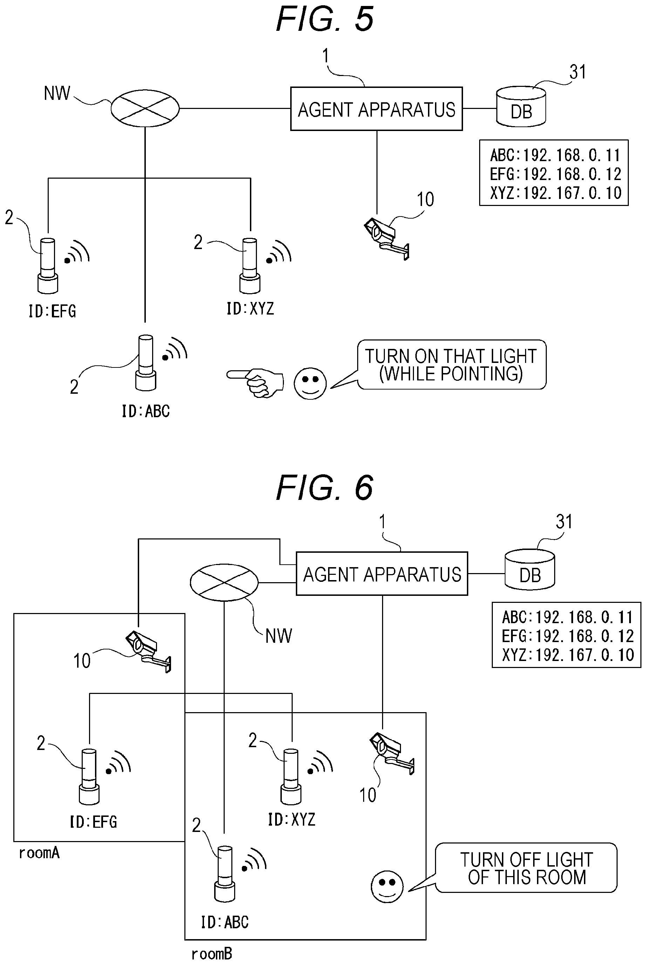

The overview of the agent system of the present technology will be described with reference to Figs. 5 and 6.

Here, a case where an agent system is used in a house where a user lives will be described as an example of the environment. There are various operation target equipment 2 in the house.

Furthermore, the agent system may be used in any other environment such as passenger cars or other vehicles, offices, stores, educational facilities, or public facilities. Furthermore, one agent system may integrally handle a plurality of geographically separated environments (for example, home and a passenger car, or home and an office).

In Fig. 5, as an example, three illumination apparatuses 2 as operation target equipment are connected to the network NW by wire or wirelessly. Furthermore, each illumination apparatus 2 is connected to the agent apparatus 1 so as to be able to communicate with each other via the network NW.

Here, when the user requests the agent apparatus 1 to operate the equipment by sound, for example, there is a case of giving an instruction by a phrase such as "turn on the light". In such a case, the illumination apparatus 2 to be operated is specified by an ambiguous content such as "all lights" or "one of the lights that cannot be specified". There may be no problem in a case where there is only one operation target equipment 2 specified by the general name used by the user for the sound input instruction, but it is difficult to specify the operation target equipment 2 by reflecting a request, such as "turn on the light near the TV".

In order to request the agent apparatus 1 to operate a specific operation target equipment 2 by sound input by the user, there is also a method of specifying the operation target equipment 2 by giving an instruction using an alias (name) or the like given to a command or function registered by the user in advance or registered in the operation target equipment 2 in advance.

However, with an operation using a predetermined name such as an alias, only a user who knows the name in advance can request the operation, and other users who do not know the name cannot specify the operation target equipment 2. Furthermore, even for a user who knows the alias, the more the number of registered operation target equipment 2 increases, the more the burden of remembering the alias increases.

Furthermore, in order to control the specified operation target equipment 2 via the network NW after specifying the operation target equipment 2 by analyzing the user's sound or action, it is necessary to known the IP address of the specified operation target equipment 2.

Thus, according to the present technology, each illumination apparatus 2 has a means for transmitting the information of the equipment ID and the IP address to the agent apparatus 1, and the agent apparatus 1 stores them in the equipment information management DB 31 of the agent apparatus 1 with the equipment ID and the IP address of each illumination apparatus 2 being associated on the basis of the information obtained from the illumination apparatus 2. In the embodiment, for example, an IP address is associated with each of equipment IDs "ABC", "EFG", and "XYZ" and stored.

In an environment where the above situation is prepared, the user utters "turn on that light" in order to turn on only a specific illumination apparatus 2, and indicates the illumination apparatus 2 that is a target of the operation by a gesture with a finger.

In this case, the agent apparatus 1 acquires the operation instruction content by analyzing the sound data from the sound input for validation of (turning on) the function designated by "that" by the user and analyzes the pointed direction from the image data to determine that there is an illumination apparatus in the pointed direction and there is a request "turn on the light".

The illumination apparatus 2 specified as the operation target has a function of transmitting its own equipment ID to the surroundings by infrared light. The agent apparatus 1 decodes the data embedded in the received infrared light and acquires the equipment ID of the specified illumination apparatus 2. Then, the agent apparatus 1 acquires the IP address associated with the equipment ID from the equipment information management DB 31, and issues a command for turning on the light to the acquired IP address.

By collating the equipment ID acquired from the illumination apparatus 2 through infrared light and the equipment ID acquired from the network NW, the operation of the specified illumination apparatus 2 can be executed. That is, it is possible to request the agent apparatus 1 to operate the operation target equipment 2 such as the illumination apparatus 2 by using intuitive equipment identification such as a pointing gesture without using a predetermined equipment name such as an alias.

Furthermore, as shown in Fig. 6, it is possible to simultaneously operate the illumination apparatuses 2 in the specific region.

In this case, with the equipment ID and the IP address of each illumination apparatus 2 being associated with each other, the equipment ID of the illumination apparatus 2 is associated with each room (roomA, roomB) in advance.

The user utters "turn off the light in this room" to turn off the light in the room roomB.

In this case, the agent apparatus 1 acquires the operation instruction content by analyzing the sound data from the sound input for turning off the illumination apparatus 2 designated by "this" by the user and analyzes the current position of the user from the image data to determine that the user is currently in the room roomB and there is a request "turn on the light of roomB".

### <4. Processing of first embodiment>

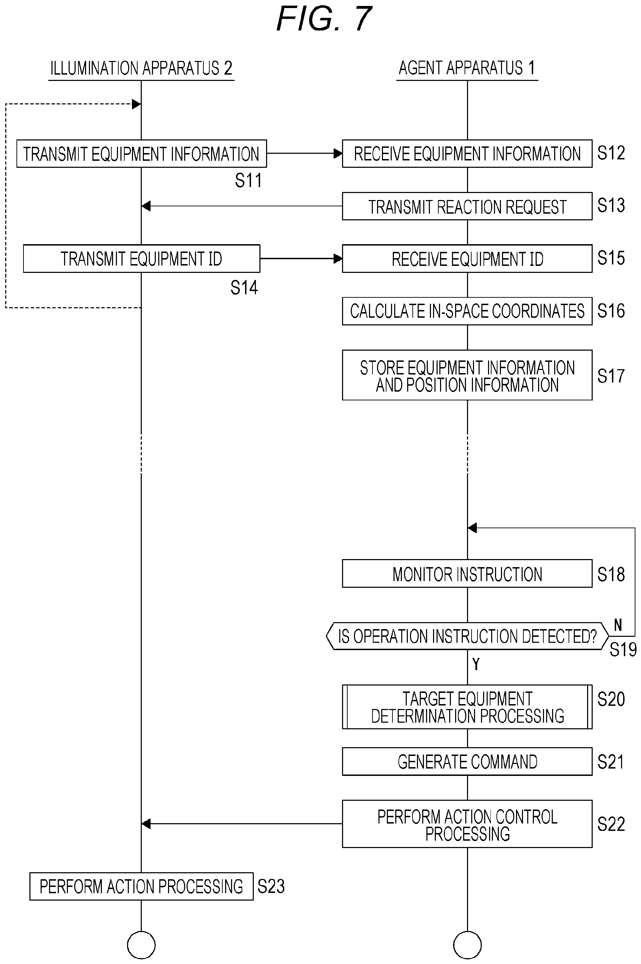

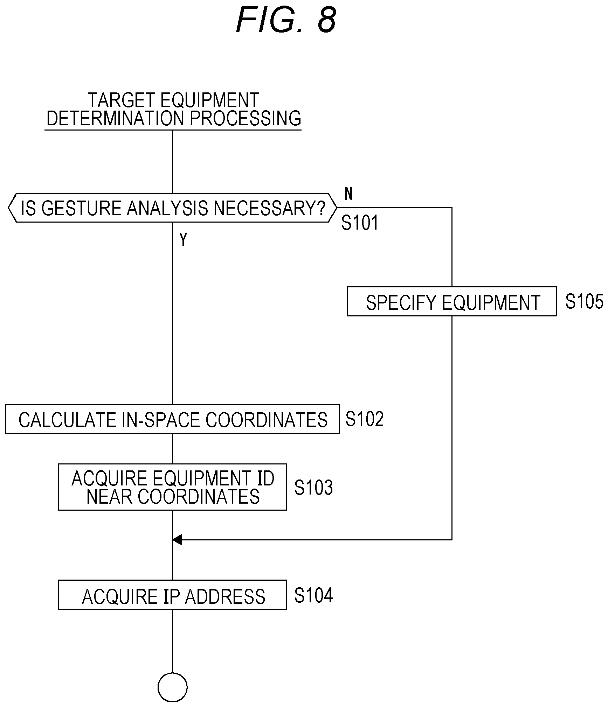

The processing of the first embodiment in the agent system will be described with reference to Figs. 7 and 8. In the first embodiment, when the user uses the agent system, the equipment information and the position information are stored in the initial setting stage.

An overview of the agent system will be described with reference to Fig. 7. Fig. 7 shows an example of the flow of processing executed by the agent apparatus 1 and the operation target equipment 2 (illumination apparatus 2). Note that, in the following, processing similar to the processing once described is denoted by the same reference numeral, and the description thereof will be omitted.

First, in step S11, the illumination apparatus 2 transmits equipment information to the agent apparatus 1 via the network NW when using the agent system. The equipment information is information about the equipment ID and IP address of the equipment itself. Note that it is desirable that the equipment ID is an ID system that can ensure sufficient uniqueness so that it does not interfere with the IDs of other equipment.

Upon receiving the equipment information from the illumination apparatus 2 in step S12, the agent apparatus 1 advances the processing to step S13. The agent apparatus 1 transmits a reaction request to the illumination apparatus 2 in step S13.

The illumination apparatus 2 that has received the reaction request transmits the equipment ID information in step S14. Here, the illumination apparatus 2 uses infrared communication as a communication means. Note that it is desirable that the communication means has high directivity. This is because it becomes easy to specify the illumination apparatus 2 that emits infrared light. Furthermore, considering susceptibility to noise, it is desirable to use coding having high error correction capability together.

Upon receiving the equipment ID information from the illumination apparatus 2 in step S15, the agent apparatus 1 determines whether the equipment ID is the same as the equipment ID received in step S12. In a case where the equipment IDs are not the same, the agent apparatus 1 waits until another equipment ID is received. Furthermore, in a case where the same equipment ID cannot be received for a certain period of time or longer, the user may be notified of an error result that prompts a retry.

Here, it is also conceivable to use the imaging unit 12 as a method for the agent apparatus 1 to acquire the identification information of the illumination apparatus 2. In this case, the information of the equipment ID is embedded on the surface of the operation target equipment 2, by printing a QR code (registered trademark) or the like, for example. The agent apparatus 1 can acquire the image data of the code by the imaging unit 12, perform necessary processing in the imaging signal processing unit 15, and then analyze the image data by the control unit 40, thereby acquiring the equipment ID of each illumination apparatus 2.

In a case where the equipment IDs are the same, the agent apparatus 1 detects in-space coordinates in step S16. Here, the agent apparatus 1 determines the illumination apparatus 2 that has transmitted the infrared light by the reception with the information receiving unit 13. As the determination method, for example, a communication means having high directivity is used, and when the information receiving unit 13 receives the communication, the equipment in the reception direction is determined to be the illumination apparatus 2 that has transmitted the signal. The equipment is considered to be specified by analyzing image data within the range of the agent system acquired by the imaging unit 12. At this time, the agent apparatus 1 determines the transmission direction of the signal from the angle of the imaging unit 12 when the information receiving unit 13 receives the signal, for example, by rotating the information receiving unit 13, and analyzes the image data of the illumination apparatus 2 or the like regarding the transmission direction captured by the imaging unit 12 to calculate the in-space coordinates of the illumination apparatus 2. Therefore, the installation position of the illumination apparatus 2 in the agent system can be determined. Note that the installation position information of the illumination apparatus 2 can be stored, for example, by input operation to the agent apparatus 1 by the user.

Thereafter, the agent apparatus 1 stores the equipment information and the position information in step S17. The agent apparatus 1 stores the equipment information in which the equipment ID of the illumination apparatus 2 is associated with the IP address in the equipment information management DB 31, and the in-space coordinates as the position information of the illumination apparatus 2 in the position information management DB 32.

Furthermore, here, the agent apparatus 1 acquires the sates of peripheral equipment of the illumination apparatus 2 as image data by the imaging unit 12 and analyzes the image data to store the relative position relationship to the peripheral equipment such as "on the desk" and "beside the TV" as position information in the position information management DB 32. Furthermore, the agent apparatus 1 measures the in-space coordinates of various objects arranged in the region of the agent system.

Thus, the pre-processing when the user uses the agent system is completed. Here, by storing not only the equipment information but also the position information at the stage of initial setting, it is possible to reduce the processing burden when the agent apparatus 1 executes the target equipment determination processing to be described later.

The processing of steps S11 to S17 is processing executed each time the operation target equipment 2 is added when the user uses the agent system.

Thereafter, the agent apparatus 1 performs processing of monitoring an instruction input from the user by the sensing equipment 10 in step S18. For example, by analyzing sound data acquired by the microphone 11 or image data acquired by the imaging unit 12, it is determined whether or not it is an operation instruction for the illumination apparatus 2. Here, the agent apparatus 1 also acquires information about the operation content by analyzing the sound data.

The agent apparatus 1 performs the instruction monitoring processing of step S18 until it detects the operation instruction of the illumination apparatus 2 in step S19.

When the operation instruction to the illumination apparatus 2 is detected in step S19, the agent apparatus 1 advances the processing to step S20, and executes the target equipment determination processing.

Here, details of the target equipment determination processing in step S20 will be described with reference to Fig. 8.

First, in step S101, the control unit 40 of the agent apparatus 1 determines whether or not the gesture analysis is necessary. Here, the case where the gesture analysis is necessary means a case where the illumination apparatus 2 that is a target of the operation cannot be specified because the expression is ambiguous only by analyzing the sound data collected by the microphone 11.

When it is determined in step S101 that the gesture analysis is necessary, the control unit 40 advances the processing to step S102, and executes the calculation processing of the in-space coordinates. In a gesture such as pointing with a finger, the control unit 40 calculates the in-space coordinates of the position indicated by the gesture from the angle of the arm or finger of the user who made the gesture.

Then, in step S103, the control unit 40 acquires the information of the equipment ID close to the calculated value of the in-space coordinates from the position information management DB 32. At this time, it is also assumed that there is a plurality of equipment IDs in which the in-space coordinates approximate to the value of the in-space coordinates are stored. In this case, the control unit 40 can also select the equipment ID according to the request content by analyzing the sound data of the user's utterance and estimating the request content.

Upon acquiring the equipment ID, the control unit 40 acquires the IP address corresponding to the acquired equipment ID from the equipment information management DB 31 in step S104. Then, the control unit 40 ends the processing of Fig. 8.

On the other hand, in a case where the gesture analysis is unnecessary in step S101, the control unit 40 advances the processing to step S105. The case where the gesture analysis is unnecessary includes, for example, the case where the equipment ID can be specified because the acquired sound data contains an alias, the case where the equipment ID can be specified from the expression indicating a specific location such as "on the desk" of the sound data, or the like.

In step S105, the control unit 40 specifies the equipment that is a target of the operation in each of the above cases.

Then, the control unit 40 acquires the IP address corresponding to the equipment ID in step S104, and completes the processing of Fig. 8.

Returning to Fig. 7, the agent apparatus 1 advances the processing from step S20 to step S21. In step S21, the agent apparatus 1 executes command generation processing on the basis of the information of the analyzed instruction content of the illumination apparatus 2. Then, the agent apparatus 1 executes action control processing in step S22, and causes the illumination apparatus 2 to execute action processing in step S23.

Thus, the processing of the first embodiment in the agent system is completed.

### <5. Processing of second embodiment>

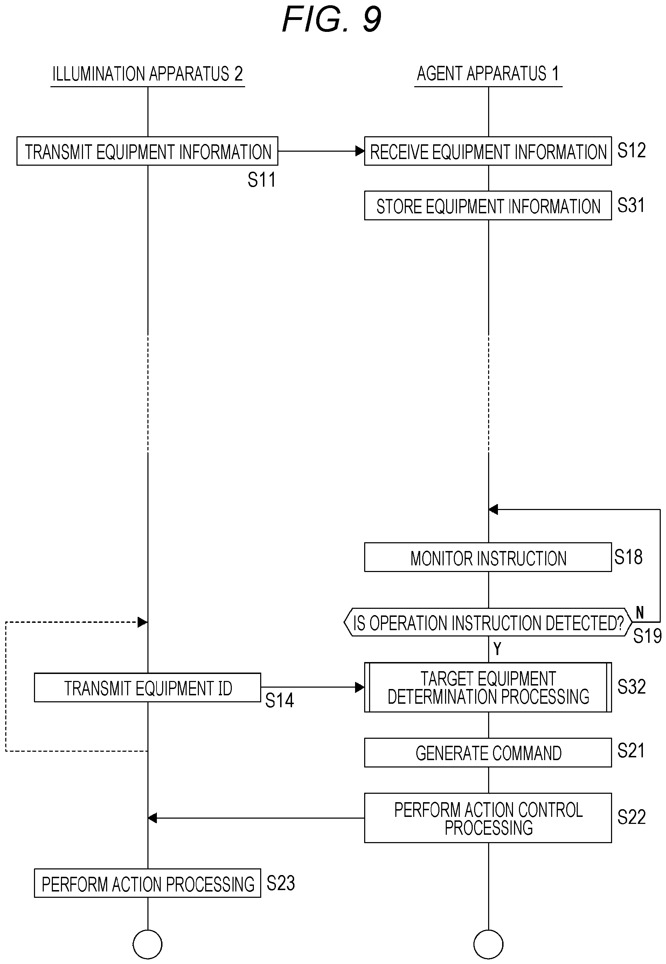

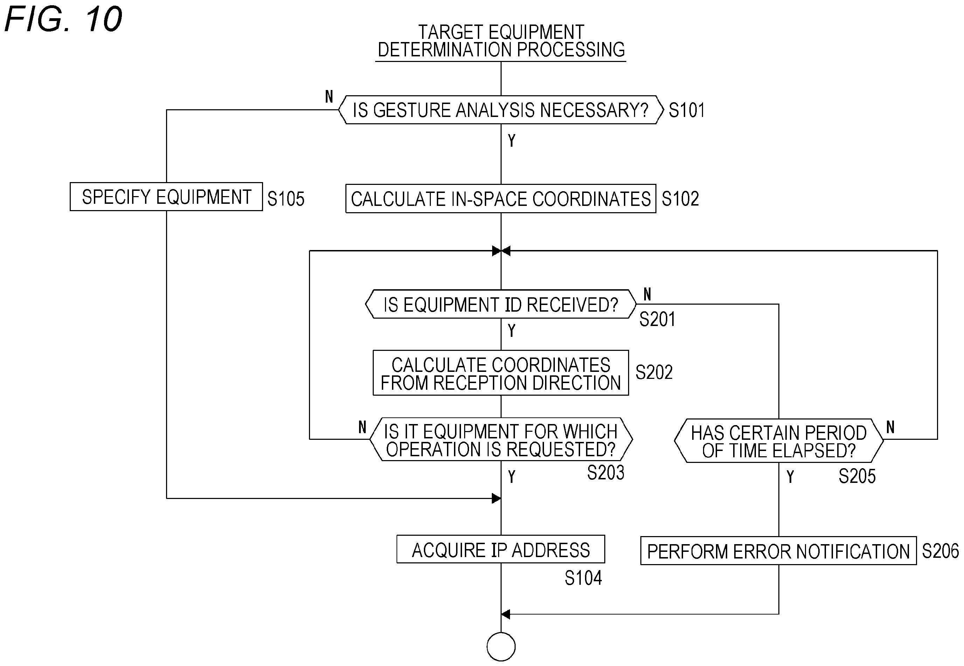

Next, the processing of the second embodiment in the agent system will be described with reference to Figs. 9 and 10. The second embodiment is processing of calculating the in-space coordinates of the operation target equipment 2 such as the illumination apparatus 2 in the target equipment determination processing when using the agent system.

An overview of the agent system according to the second embodiment will be described with reference to Fig. 9. Fig. 9 shows an example of the flow of processing executed by the agent apparatus 1 and the operation target equipment 2 (illumination apparatus 2).

First, the illumination apparatus 2 transmits equipment information to the agent apparatus 1 via the network NW when using the agent system. Upon receiving the equipment information from the illumination apparatus 2 in step S12, the agent apparatus 1 advances the processing to step S31.

In step S31, the agent apparatus 1 stores the equipment information in which the equipment ID of the illumination apparatus 2 is associated with the IP address in the equipment information management DB 31.

Thus, the pre-processing when the user uses the agent system is completed. Furthermore, in the second embodiment, in step S14, the equipment ID is intermittently transmitted from the illumination apparatus 2 by infrared communication.

Thereafter, the agent apparatus 1 performs processing of monitoring an instruction input from the user by the sensing equipment 10 in step S18. Then, the agent apparatus 1 performs the instruction monitoring processing of step S18 until it detects the operation instruction of the illumination apparatus 2 in step S19.

When the operation instruction to the illumination apparatus 2 is detected in step S19, the agent apparatus 1 advances the processing to step S32, and executes the target equipment determination processing.

Here, details of the target equipment determination processing in step S32 will be described with reference to Fig. 10.

First, in step S101, the control unit 40 of the agent apparatus 1 determines whether or not the gesture analysis is necessary.

When it is determined in step S101 that the gesture analysis is necessary, the control unit 40 advances the processing to step S102, and executes the calculation processing of the in-space coordinates of the position indicated by the gesture from the angle of the arm or finger of the user who made the gesture.

Thereafter, the control unit 40 determines whether the equipment ID information is received from the illumination apparatus 2 by infrared communication in step S201. Upon receiving the equipment ID in step S201, the control unit 40, in step S202, determines the illumination apparatus 2 that has transmitted infrared light from the reception direction in the information receiving unit 13, and calculates the in-space coordinates of the determined illumination apparatus 2. The in-space coordinates are calculated by analyzing the image data captured by the imaging unit 12.

Then, in step S203, the control unit 40 determines whether the illumination apparatus of the equipment ID acquired in step S201 is equipment for which an operation request has been made. Specifically, the control unit 40 determines whether the illumination apparatus 2 is equipment for which an operation request has been made depending on whether or not the value of the in-space coordinates calculated by the gesture analysis in step S102 and the value of the in-space coordinates calculated on the basis of the angle of the imaging unit 12 when the information receiving unit 13 has received the signal in step S202 are approximate.

Upon determining that it is equipment for which an operation request has been made in step S203, the control unit 40 in step S104 acquires the IP address corresponding to the equipment ID received in step 201 from the equipment information management DB 31. Thereafter, the control unit 40 ends the processing of Fig. 10.

When it is determined in step S203 that it is not equipment for which an operation request has been made, the control unit 40 advances the processing to step S201, and waits until the equipment ID by new infrared light is received. In a case where the equipment ID is not received in step S201, the processing of steps S201 heading to S205 is looped until a certain period of time elapses in step S205 or a new equipment ID is acquired in step S201.

Here, the control unit 40 waits until the receiving unit of the rotating information receiving unit 13 receives a signal transmitted from the illumination apparatus 2. Furthermore, in a case where the agent apparatus 1 is provided with a plurality of the information receiving units 13, the information receiving units 13 sequentially perform processing of detecting the transmission from the illumination apparatus 2, and therefore the control unit 40 waits until the information receiving unit 13 that is a target of the processing is obtained. The certain period of time in step S205 is caused by such a waiting time.

Here, when a certain period of time elapses without receiving the equipment ID in step S205, the control unit 40 advances the processing from step S205 to step S206, and gives an error notification that the instruction content of the user is not reflected. Then, the control unit 40 completes the processing of Fig. 10.

On the other hand, in a case where the gesture analysis is unnecessary in step S101, the control unit 40 advances the processing to step S105. In step S105, the control unit 40 specifies the equipment that is a target of the operation in each of the above cases.

Returning to Fig. 9, the agent apparatus 1 advances the processing from step S32 to step S21. In step S21, the agent apparatus 1 executes command generation processing on the basis of the information of the analyzed instruction content of the illumination apparatus 2. Then, the agent apparatus 1 executes action control processing in step S22, and causes the illumination apparatus 2 to execute action processing in step S23.

Thus, the processing of the second embodiment in the agent system is completed.

### <6. Processing of third embodiment>

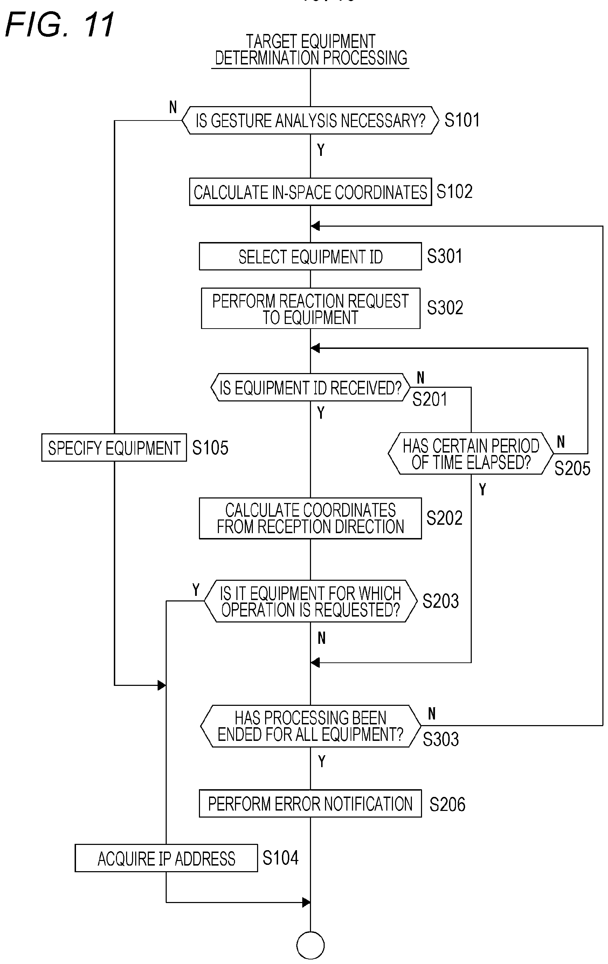

Next, the processing of the third embodiment in the agent system will be described with reference to Fig. 11. In the third embodiment, when the illumination apparatus 2 receives a request request for the agent apparatus 1 from the network NW, infrared light having an equipment ID is transmitted.

Here, differences in the target equipment determination processing in step S32 from the second embodiment will be described.

First, in step S101, the control unit 40 of the agent apparatus 1 determines whether or not the gesture analysis is necessary. When it is determined in step S101 that the gesture analysis is necessary, the control unit 40 advances the processing to step S102, and executes the calculation processing of the in-space coordinates of the position indicated by the gesture from the angle of the arm or finger of the user who made the gesture.

Then, in step S301, the control unit 40 selects the equipment ID to be processed from the equipment IDs stored in the equipment information management DB 31. Then, in step S302, the control unit 40 makes a reaction request to the illumination apparatus 2 corresponding to the selected equipment ID. When the illumination apparatus 2 receives the request request from the control unit 40, the illumination apparatus 2 starts transmitting infrared light having the equipment ID information of its own equipment.

Thereafter, the control unit 40 determines whether the equipment ID information is received from the illumination apparatus 2 by infrared communication in step S201. Upon receiving the equipment ID in step S201, the control unit 40, in step S202, determines the illumination apparatus 2 that has transmitted infrared light from the angle of incident of the infrared light received by the information receiving unit 13 and calculates the in-space coordinates of the determined illumination apparatus 2.

Then, in step S203, the control unit 40 determines whether the illumination apparatus of the equipment ID acquired in step S201 is equipment for which an operation request has been made.

When it is determined in step S203 that it is not equipment for which an operation request has been made, the control unit 40 advances the processing to step S303, and determines whether the processing has been ended for all of the equipment. In a case where the processing has not been ended for all of the equipment in step S303, the control unit 40 advances the processing from step S303 to step S301, and then specifies the equipment for which an operation request has been made in step S203 or executes processing similar to the above until the processing is ended for all of the equipment in step S303.

When the equipment for which an operation request has been made is specified in step S203, the control unit 40 acquires the IP address corresponding to the equipment ID of the equipment in step S104 and ends the processing of Fig. 11.

Furthermore, in step S303, in a case where the processing is completed for all of the equipment, that is, there is no equipment for which an operation request has been made, the control unit 40 executes an error notification in step S206 and ends the processing of Fig. 11.

Furthermore, in a case where the equipment ID is not received in step S201, the processing of steps S201 heading to S205 is looped until a certain period of time elapses in step S205 or a new equipment ID is acquired in step S201.

Here, when a certain period of time elapses without receiving the equipment ID in step S205, the control unit 40 advances the processing from step S205 to step S303, and in a case where the processing of another equipment remains, advances the processing from step S303 to S301 and proceeds the processing for the next equipment ID.

On the other hand, in a case where the gesture analysis is unnecessary in step S101, the control unit 40 advances the processing to step S105. In step S105, the control unit 40 specifies the equipment that is a target of the operation in each of the above cases. Then, the control unit 40 acquires the IP address corresponding to the equipment to be operated in step S104, and ends the processing of Fig. 11.

Thus, the target equipment determination processing of the third embodiment in the agent system is completed.

### <7. Summary and variation example>

According to the above embodiments, the following effects can be obtained.

The agent apparatus 1 according to the embodiments includes an operation information acquisition unit 42 that acquires operation information as sound data indicating an operation by the user's sound or image data indicating an operation by the user's behavior, an instruction recognition unit 43 that analyzes sound data or image data as operation information, recognizes an instruction content indicated by the operation, and specifies controlled equipment (operation target equipment 2) to be operated by the operation information among a plurality of controlled equipment (operation target equipment 2), and an instruction transmission unit 44 that generates a control signal according to the instruction content recognized by the instruction recognition unit 43 and transmits the control signal to the controlled equipment (operation target equipment 2) specified by the instruction recognition unit 43 (Fig. 7) .

Therefore, it is possible to execute the control in which the instruction content input by the sound of the user is reflected on the specific operation target equipment 2 of the plurality of controlled equipment. Thus, for example, in a case where the equipment ID of the operation target equipment 2 can be specified by an expression indicating an alias or a location extracted by sound data analysis or the like, the operation target equipment 2 can be specified and operated without analyzing the user's behavior (gesture) from the image data. That is, the processing burden on the agent apparatus 1 can be reduced.

Furthermore, in a case where the equipment ID and the operation content of the operation target equipment 2 can be specified by analyzing the user's behavior (gesture) with the image data, it is also possible to operate the operation target equipment 2 without analyzing the sound data by the user's voice input. This also reduces the processing burden on the agent apparatus 1.

Moreover, by analyzing both the sound data and the image data indicating the operation by sound and behavior, an unclear part of the sound data and the image data is complemented, and the operation instruction content from the user is reflected more accurately. Furthermore, the accuracy of specifying the operation target equipment 2 to be operated is also improved.

Therefore, even if an operation request in which the specification of the target equipment is ambiguous is performed, the accuracy of specifying the equipment to be operated can be improved, and thus a comfortable operating environment of the equipment for the user can be realized.

In the embodiments, the control unit 40 (instruction transmission unit 44) is considered to refer to the storage unit (memory unit 30) that stores the identification information (equipment ID) of the controlled equipment (operation target equipment 2) and the address information (IP address) in association with each other, acquire the address information (IP address) corresponding to the identification information (equipment ID) of the controlled equipment (operation target equipment 2) specified as an operation target, and transmit the control signal using the address information (IP address) (Fig. 7).

Therefore, the operation target equipment 2 specified by the user and the operation target equipment 2 to which the agent apparatus 1 transmits the instruction content can be associated with each other, and recognition of the operation target equipment 2 is shared between the user and the agent apparatus 1.

Therefore, when the equipment ID of the operation target equipment 2 to be operated can be acquired, a control signal according to the instruction content indicated by the user's operation to the operation target equipment 2 can be transmitted to the operation target equipment 2.

In the embodiments, the control unit 40 (instruction recognition unit 43) is considered to acquire the identification information (equipment ID) of the controlled equipment (operation target equipment 2) that is an operation target when it is in the position or direction designated by the behavior of the user shown in the image data as the operation information by receiving a transmission signal from the controlled equipment (operation target equipment 2) arranged in the position or direction (Fig. 9).

That is, the agent apparatus 1 specifies the operation target equipment 2 to be operated by analyzing the gesture of the user such as pointing to the operation target equipment 2 shown in the image data, and receives the transmission signal from the specified operation target equipment 2 to acquire the equipment ID. Then, the agent apparatus 1 realizes the operation of the operation target equipment 2 in which the user's instruction content is reflected by transmitting the control signal according to the user's instruction content to the operation target equipment 2 to the address corresponding to the equipment ID.

Therefore, the operation target equipment 2 specified by the user and the operation target equipment 2 to which the agent apparatus 1 transmits the instruction content can be associated with each other, and recognition of the operation target equipment 2 is shared between the user and the agent apparatus 1.

Therefore, when the equipment ID of the operation target equipment 2 to be operated can be acquired, a control signal according to the instruction content indicated by the user's operation to the operation target equipment 2 can be transmitted to the operation target equipment 2.

Furthermore, even when a specific equipment name such as an alias is not used, the agent apparatus 1 can be requested to operate the operation target equipment 2 by an intuitive specifying method such as a user's pointing gesture. That is, it becomes possible to specify the interpretation of the request by the directives such as "that" and "it" without using the contexts.

In the embodiments, the control unit 40 (instruction recognition unit 43) is considered to instruct the specific controlled equipment (operation target equipment 2) to transmit a signal, and by receiving the signal, determine the information of the position of the controlled equipment (operation target equipment 2)such that the storage data (position information management DB 32) as the position information corresponding to the identification information (equipment ID) is formed (S17 in Fig. 7).

By forming in advance the position information management DB 32 as the position information corresponding to the equipment ID, when the position information indicated by the gesture of the user or the like is acquired by analyzing the image data or the like, the equipment ID of the operation target equipment 2 around the position information can be acquired as that of the operation target. That is, by collating the position information corresponding to the equipment ID with the position information indicated by the user, the operation target equipment 2 to be operated can be easily specified. Furthermore, by storing the correspondence relationship between the equipment ID and the position information in the position information management DB 32 in advance, it is not necessary to generate the correspondence relationship each time collation with the equipment indicated by the user is performed, and the processing burden on the agent apparatus 1 can be reduced.

Furthermore, at this time, the agent apparatus 1 analyzes the image data acquired from the imaging unit 12 so that the positions of various equipment other than the operation target equipment installed within the range of the agent system, and various objects such as windows, doors, chairs, desks, chests, or beds can be stored in the position information management DB 32 or the like in association with the names of the objects.

Thus, the agent apparatus 1 can grasp the location and characteristics (mode names or the like) of equipment and objects within the range in which the agent system can be used, and therefore in constructing a management screen or setting screen in the system, it is possible to configure the management screen or setting screen with a graphical screen different from the conventional list type equipment list display. For example, in a situation where multiple speakers are arranged in a room to construct a surround environment, when a map of the room obtained by mapping the speaker positions obtained by the present technology is displayed on the screen, it is possible to present the optimal arrangement including acoustic sounds to the user in an easy-to-understand manner.

Furthermore, since the agent apparatus 1 can grasp the positions of various equipment other than the equipment to be operated, the objects, or the like, it is also possible to relatively designate the operation target equipment 2 with reference to the equipment or the like in combination with the designation by the name of equipment, objects, and the like obtained by analysis of the sound data. For example, it is possible to give an instruction based on relative positions such as "far and near" and "up, down, left and right", e.g., "turn off the light near the television".

Furthermore, since the agent apparatus 1 can grasp the position of the operation target equipment 2, it is also possible to specify the operation target equipment 2 using grouping as shown in Fig. 6. For example, in a case where the user gives an instruction to "turn off the light of this room", the agent apparatus 1 acquires the position information of the user by analyzing the image data acquired from the imaging unit 12, and can collectively control the illumination apparatuses 2 present in the region of the room in which the user's position information is included. Furthermore, when a name such as "living room" is set in advance in the region as a room, it is possible to execute similar processing on an instruction from the user such as "turn off the light of the living room".

In the embodiments, the control unit 40 (instruction recognition unit 43) is considered to specify the controlled equipment (operation target equipment 2) arranged in the position designated by the user's utterance shown in the sound data as the operation information as the controlled equipment of the operation target (operation target equipment 2) (S19 in Fig. 7).

In a case where the user's utterance includes information sufficient to specify the position, by analyzing the sound data, it is possible to specify controlled equipment as the operation target equipment 2 that is the operation target regardless of the presence or absence of a gesture for specifying the position of the operation target equipment 2 by the user.

Therefore, when the operation target equipment 2 can be specified by analyzing the sound data, the operation target equipment 2 can be operated without analyzing the content of the gesture. That is, the operability of the agent system is improved.

In the embodiments, the control unit 40 (instruction recognition unit 43) is considered to calculate the in-space coordinates of the position designated by the behavior of the user shown in the image data as the operation information, and specify the controlled equipment (operation target equipment 2) positioned at the in-space coordinates as the controlled equipment to be operated (operation target equipment 2) (Fig. 8).

Therefore, by calculating the position designated by the user as the value of the in-space coordinates, the designated position can be grasped as a specific numerical value. Therefore, since the agent apparatus 1 can grasp the in-space coordinates of each operation target equipment 2, it is possible to specify the position of the operation target equipment 2 in consideration of height, depth, and the like.

In the embodiments, the control unit 40 (instruction recognition unit 43) is considered to sequentially instruct a plurality of controlled equipment (operation target equipment 2) to transmit signals, and by receiving the signals, determine the position information of each controlled equipment (operation target equipment 2), and specify the controlled equipment (operation target equipment 2) to be operated when it is in the position or direction designated by the behavior of the user (Fig. 11).

By sequentially instructing the plurality of operation target equipment 2 to transmit signals, when the signals are received, the signals will not be confused with signals from other operation target equipment 2, and the operation target equipment 2 to be operated can be clearly specified. Furthermore, when the agent apparatus 1 receives the signal transmitted from the operation target equipment 2, since the number of the operation target equipment 2 that is transmitting the signal is one, the signal will not be confused with the signal from the other operation target equipment 2. This is particularly effective in a case where the communication means used when the agent apparatus 1 and the operation target equipment 2 transmit and receive the identification information has low directivity. In the case of a communication means having low directivity, it is difficult to specify the transmission directions of the signals transmitted from the plurality of operation target equipment 2, and it is difficult to determine from which operation target equipment 2 the signal has been transmitted.

It is considered that in the embodiments, the control unit 40 (instruction recognition unit 43) specifies the controlled equipment (operation target equipment 2) to be operated by analyzing the image data in a case where the controlled equipment (operation target equipment 2) to be operated cannot be specified by analyzing the sound data.

That is, in a case where the operation target equipment 2 can be specified by analyzing the sound data, the image data analyzing processing can be omitted. Thus, the processing burden on the agent apparatus 1 can be reduced.

The program of the embodiments is a program that causes, for example, a CPU, a DSP, or the like, or a device including them to execute the processing of Figs. 7 to 11 shown in the above-described embodiments.

That is, the program according to the embodiments is a program that causes the information processing apparatus to execute operation information acquisition processing of acquiring operation information as sound data indicating an operation by the user's sound or image data indicating an operation by the user's behavior, instruction recognition processing of analyzing sound data or image data as the operation information, recognizing an instruction content indicated by the operation, and specifying controlled equipment to be operated by the operation information among a plurality of controlled equipment, and instruction transmission processing of generating a control signal according to the instruction content recognized by the instruction recognition processing and transmitting the control signal to the controlled equipment specified in the instruction recognition processing.

The agent apparatus 1 (information processing apparatus) described above can be realized by such a program.

Such a program can be recorded in advance in an HDD, which is a recording medium built in equipment such as a computer apparatus, or a ROM in a microcomputer having a CPU, and the like.

Alternatively, furthermore, it can be temporarily or permanently stored (recorded) in a removable recording medium including a flexible disc, a compact disc read only memory (CD-ROM), a magneto optical (MO) disc, a digital versatile disc (DVD), a Blu-ray disc (registered trademark), a magnetic disc, a semiconductor memory, a memory card, or the like. Such a removable recording medium can be provided as so-called package software.

Furthermore, such a program can be installed from a removable recording medium into a personal computer or the like, or can be downloaded from a download site via a network such as LAN or the Internet.

Furthermore, such a program is suitable for providing the agent apparatus 1 of the embodiments in a wide range. For example, by downloading the program to a personal computer, a portable information processing apparatus, home equipment, recording reproducing equipment, broadcasting equipment, a mobile phone, game equipment, video equipment, a personal digital assistant (PDA), or the like, the personal computer or the like can be the information processing apparatus of the present disclosure.

Furthermore, the processing described in conjunction with the flowchart in the present specification may not necessarily be executed in the order indicated in the flowchart. Some processing steps may be executed in parallel. Furthermore, an additional processing step may be adopted, and some processing steps may be omitted.

Although embodiments of the present disclosure have been described above with reference to the accompanying drawings, the technical scope of the present disclosure is not limited to the above. A person skilled in the art may find various alterations and variations within the scope of the appended claims, and it should be understood that they will naturally come under the technical scope of the present disclosure.

Furthermore, the effects described in this specification are merely illustrative or exemplified effects, and are not limitative. That is, with or in place of the above effects, the technology according to the present disclosure may achieve other effects that are clear to those skilled in the art from the description of this specification.

Note that the present technology may also adopt the configuration described below.
(1) An information processing apparatus including:
   an operation information acquisition unit that acquires operation information as sound data indicating an operation by a sound of a user or image data indicating an operation by behavior of the user;
   an instruction recognition unit that analyzes the sound data or image data as the operation information, recognizes an instruction content indicated by the operation, and specifies controlled equipment that is an operation target by the operation information among a plurality of controlled equipment; and
   an instruction transmission unit that generates a control signal according to the instruction content recognized by the instruction recognition unit and transmits the control signal to the controlled equipment specified by the instruction recognition unit.
(2) The information processing apparatus according to (1), in which
   the instruction transmission unit refers to a storage unit that stores identification information and address information of the controlled equipment in association with each other, acquires the address information corresponding to the identification information of the controlled equipment specified as an operation target, and transmits the control signal using the address information.
(3) The information processing apparatus according to (2), in which
   the instruction recognition unit acquires the identification information of the controlled equipment that is an operation target when the controlled equipment is in a position or direction designated by the behavior of the user shown in the image data as the operation information by receiving a transmission signal from the controlled equipment arranged in the position or direction.
(4) The information processing apparatus according to (2) or (3), in which
   the instruction recognition unit acquires the identification information of the controlled equipment that is an operation target when the controlled equipment is in a position or direction designated by the behavior of the user shown in the image data as the operation information from the image data of the controlled equipment arranged in the position or direction.
(5) The information processing apparatus according to any of (2) to (4), in which
   the instruction recognition unit instructs specific controlled equipment to transmit a signal, and by receiving the signal, determines position information of the controlled equipment such that storage data as the position information corresponding to the identification information is formed.
(6) The information processing apparatus according to (5), in which
   the instruction recognition unit specifies controlled equipment arranged at a position designated by an utterance of the user shown in the sound data as the operation information as the controlled equipment that is an operation target.
(7) The information processing apparatus according to (5) or (6), in which
   the instruction recognition unit calculates in-space coordinates of a position designated by the behavior of the user shown in the image data as the operation information and specifies controlled equipment positioned at the in-space coordinates as the controlled equipment that is an operation target.
(8) The information processing apparatus according to any of (2) to (7), in which
   the instruction recognition unit sequentially instructs the plurality of controlled equipment to transmit signals, by receiving the signals, determines position information of each controlled equipment, and specifies the controlled equipment that is an operation target when the controlled equipment is in a position or direction designated by the behavior of the user.
(9) The information processing apparatus according to any of (1) to (8), in which the instruction recognition unit specifies the controlled equipment that is an operation target by analyzing the image data in a case where the controlled equipment that is an operation target cannot be specified by analyzing the sound data.
(10) An information processing method to be performed by an information processing apparatus executing:
   operation information acquisition processing that acquires operation information as sound data indicating an operation by a sound of a user or image data indicating an operation by behavior of the user;
   instruction recognition processing that analyzes the sound data or image data as the operation information, recognizes an instruction content indicated by the operation, and specifies controlled equipment that is an operation target by the operation information among a plurality of controlled equipment; and
   instruction transmission processing that generates a control signal according to the instruction content recognized by the instruction recognition processing and transmits the control signal to the controlled equipment specified in the instruction recognition processing.
(11) An information processing apparatus including:
   a communication unit that receives a control signal transmitted by a control apparatus executing operation information acquisition processing that acquires operation information as sound data indicating an operation by a sound of a user or image data indicating an operation by behavior of the user, instruction recognition processing that analyzes the sound data or image data as the operation information, recognizes an instruction content indicated by the operation, and specifies controlled equipment that is an operation target by the operation information among a plurality of controlled equipment, and instruction transmission processing that generates a control signal according to the instruction content recognized in the instruction recognition processing and transmits the control signal to the controlled equipment specified in the instruction recognition processing; and
   an equipment control unit that controls an action according to the control signal received by the communication unit.
(12) An information processing method to be performed by an information processing apparatus executing:
   communication processing that receives a control signal transmitted by a control apparatus executing operation information acquisition processing that acquires operation information as sound data indicating an operation by a sound of a user or image data indicating an operation by behavior of the user, instruction recognition processing that analyzes the sound data or image data as the operation information, recognizes an instruction content indicated by the operation, and specifies controlled equipment that is an operation target, and instruction transmission processing that generates a control signal according to the instruction content recognized in the instruction recognition processing and transmits the control signal to the controlled equipment specified in the instruction recognition processing; and
   equipment control processing that controls an action according to the control signal received by the communication processing.

### REFERENCE SIGNS LIST

- 1: Agent apparatus
- 2: Operation target equipment (Illumination apparatus)
- 40: Control unit
- 42: Operation information acquisition unit
- 43: Instruction recognition unit
- 44: Instruction transmission unit
- 70: Calculation unit
- 71: Communication unit
- 72: Equipment control unit

## Claims

1. An information processing apparatus comprising:
an operation information acquisition unit that acquires operation information as sound data indicating an operation by a sound of a user or image data indicating an operation by behavior of the user;
an instruction recognition unit that analyzes the sound data or image data as the operation information, recognizes an instruction content indicated by the operation, and specifies controlled equipment that is an operation target by the operation information among a plurality of controlled equipment; and
an instruction transmission unit that generates a control signal according to the instruction content recognized by the instruction recognition unit and transmits the control signal to the controlled equipment specified by the instruction recognition unit.

2. The information processing apparatus according to claim 1, wherein
the instruction transmission unit refers to a storage unit that stores identification information and address information of the controlled equipment in association with each other, acquires the address information corresponding to the identification information of the controlled equipment specified as an operation target, and transmits the control signal using the address information.

3. The information processing apparatus according to claim 2, wherein
the instruction recognition unit acquires the identification information of the controlled equipment that is an operation target when the controlled equipment is in a position or direction designated by the behavior of the user shown in the image data as the operation information by receiving a transmission signal from the controlled equipment arranged in the position or direction.

4. The information processing apparatus according to claim 2, wherein
the instruction recognition unit acquires the identification information of the controlled equipment that is an operation target when the controlled equipment is in a position or direction designated by the behavior of the user shown in the image data as the operation information from the image data of the controlled equipment arranged in the position or direction.

5. The information processing apparatus according to claim 2, wherein
the instruction recognition unit instructs specific controlled equipment to transmit a signal, and by receiving the signal, determines position information of the specific controlled equipment such that storage data as the position information corresponding to the identification information is formed.

6. The information processing apparatus according to claim 5, wherein
the instruction recognition unit specifies controlled equipment arranged at a position designated by an utterance of the user shown in the sound data as the operation information as the controlled equipment that is an operation target.

7. The information processing apparatus according to claim 5, wherein
the instruction recognition unit calculates in-space coordinates of a position designated by the behavior of the user shown in the image data as the operation information and specifies controlled equipment positioned at the in-space coordinates as the controlled equipment that is an operation target.

8. The information processing apparatus according to claim 2, wherein
the instruction recognition unit sequentially instructs the plurality of controlled equipment to transmit signals, by receiving the signals, determines position information of each controlled equipment, and specifies the controlled equipment that is an operation target when the controlled equipment is in a position or direction designated by the behavior of the user.

9. The information processing apparatus according to claim 1, wherein the instruction recognition unit specifies the controlled equipment that is an operation target by analyzing the image data in a case where the controlled equipment that is an operation target cannot be specified by analyzing the sound data.

10. An information processing method to be performed by an information processing apparatus executing:
operation information acquisition processing that acquires operation information as sound data indicating an operation by a sound of a user or image data indicating an operation by behavior of the user;
instruction recognition processing that analyzes the sound data or image data as the operation information, recognizes an instruction content indicated by the operation, and specifies controlled equipment that is an operation target by the operation information among a plurality of controlled equipment; and
instruction transmission processing that generates a control signal according to the instruction content recognized by the instruction recognition processing and transmits the control signal to the controlled equipment specified in the instruction recognition processing.

11. An information processing apparatus comprising:
a communication unit that receives a control signal transmitted by a control apparatus executing operation information acquisition processing that acquires operation information as sound data indicating an operation by a sound of a user or image data indicating an operation by behavior of the user, instruction recognition processing that analyzes the sound data or image data as the operation information, recognizes an instruction content indicated by the operation, and specifies controlled equipment that is an operation target by the operation information among a plurality of controlled equipment, and instruction transmission processing that generates a control signal according to the instruction content recognized in the instruction recognition processing and transmits the control signal to the controlled equipment specified in the instruction recognition processing; and
an equipment control unit that controls an action according to the control signal received by the communication unit.

12. An information processing method to be performed by an information processing apparatus executing:
communication processing that receives a control signal transmitted by a control apparatus executing operation information acquisition processing that acquires operation information as sound data indicating an operation by a sound of a user or image data indicating an operation by behavior of the user, instruction recognition processing that analyzes the sound data or image data as the operation information, recognizes an instruction content indicated by the operation, and specifies controlled equipment that is an operation target, and instruction transmission processing that generates a control signal according to the instruction content recognized in the instruction recognition processing and transmits the control signal to the controlled equipment specified in the instruction recognition processing; and
equipment control processing that controls an action according to the control signal received by the communication processing.
